# EUROPEAN PATENT APPLICATION

(11) **EP 4 615 041 A1**
(43) Date of publication of application: **10.09.2025**
(21) Application number: 22964117.0
(22) Date of filing: 04.11.2022
(51) Int. Cl.: H04W 24/10

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Gunzelmann, Rainer
(86) International application number: PCT/CN2022/130119
(87) International publication number: WO 2024/092815

(57) **Abstract**

Embodiments of the present application relate to an information transmission method and device, a communication device, and a storage medium. A network device sends first indication information, wherein the first indication information is used for a user equipment (UE) to determine whether at least one measurement configuration takes effect.

## Description

### FIELD

The present application relates to, but is not limited to, the field of wireless communication technology, and in particular to an information transmission method and device, a communication device, and a storage medium.

### BACKGROUND

In mobile communication systems, movement of user equipment (UE) causes a channel condition around the UE to change continuously. In order to support the mobility of the UE and to timely obtain the channel condition of a cell around the UE, a network configures the UE to perform radio resource management (RRM) measurement. The UE in an idle state and an inactive state autonomously selects or reselects a cell based on an RRM measurement result, and the UE in a connected state reports the RRM measurement result to the network to assist the network in making a handover decision.

### SUMMARY

In view of the above, embodiments of the present invention provide an information transmission method and device, a communication device, and a storage medium.

According to a first aspect of an embodiment of the present invention, there is provided an information transmission method, which is executed by a network device and includes: transmitting first indication information, where the first indication information is used by a user equipment (UE) to determine whether at least one measurement configuration is enabled.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the method further includes: receiving a measurement report, where the measurement report carries second indication information, and the second indication information indicate s at least one of: an enabled measurement configuration; or a disabled measurement configuration.

In an embodiment, the transmitting the first indication information includes: transmitting a first message, where the first message includes the first indication information and the at least one measurement configuration; or transmitting a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, the first indication information is further used to instruct the UE to perform measurement and/or perform measurement reporting based on a measurement configuration enabled.

In an embodiment, the first indication information is further used to instruct the UE to stop measurement and/or measurement reporting currently performed that is associated with the at least one measurement configuration.

In an embodiment, the at least one measurement configuration includes at least one of: one or more measurement identifiers; one or more measurement objects; one or more reporting configurations; one or more measurement gap (Gap) configurations; or one or more synchronization signal block measurement timing configurations (SMTCs).

According to a second aspect of an embodiment of the present invention, there is provided an information transmission method, executed by a user equipment (UE), including: determining whether at least one measurement configuration is enabled according to first indication information, where the first indication information is used by the UE to determine whether the at least one measurement configuration is enabled.

In an embodiment, the method further includes: receiving the first indication information.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the at least one measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the receiving the first indication information includes: receiving a first message, where the first message includes the first indication information and the at least one measurement configuration; or receiving a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, the method further includes: the first indication information being further used to instruct the UE to perform measurement and/or perform measurement reporting based on a measurement configuration enabled.

In an embodiment, the method further includes: the first indication information being further used to instruct the UE to stop measurement and/or measurement reporting currently performed that is associated with the at least one measurement configuration.

In an embodiment, the method further includes: transmitting a measurement report, where the measurement report carries second indication information, and the second indication information indicates at least one of: a currently enabled measurement configuration of the UE; or a currently disabled measurement configuration of the UE.

In an embodiment, the at least one measurement configuration includes at least one of: one or more measurement identifiers; one or more measurement objects; one or more reporting configurations; one or more measurement gap configurations; or one or more synchronization signal block measurement timing configurations (SMTCs).

According to a third aspect of an embodiment of the present invention, there is provided an information transmission device, arranged in a network device, including: a first transceiving module, configured to transmit first indication information, where the first indication information is used by a user equipment (UE) to determine whether at least one measurement configuration is enabled.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the first transceiving module is further configured to: receive a measurement report, where the measurement report carries second indication information, and the second indication information indicates at least one of: an enabled measurement configuration; or a disabled measurement configuration.

In an embodiment, the first transceiving module is further configured to: transmit a first message, where the first message includes the first indication information and the at least one measurement configuration; or transmit a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, in response to the first indication information being used by the UE to determine whether at least one measurement configuration is enabled, the first indication information is further used to instruct the UE to perform measurement and/or perform measurement reporting based on a measurement configuration enabled.

In an embodiment, in response to the first indication information being used by the UE to determine whether at least one measurement configuration is enabled, the first indication information is further used to instruct the UE to stop measurement and/or measurement reporting currently performed that is associated with the at least one measurement configuration.

In an embodiment, the at least one measurement configuration includes at least one of: one or more measurement identifiers; one or more measurement objects; one or more reporting configurations; one or more measurement gap (Gap) configurations; or one or more synchronization signal block measurement timing configurations (SMTCs).

According to a fourth aspect of an embodiment of the present invention, there is provided an information transmission device, arranged in a user equipment (UE), including: a first processing module, configured to determine whether at least one measurement configuration is enabled according to first indication information, where the first indication information is used by the UE to determine whether the at least one measurement configuration is enabled.

In an embodiment, the device further includes a second transceiving module, configured to receive the first indication information.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the at least one measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the second transceiving module is specifically configured to: receive a first message, where the first message includes the first indication information and the at least one measurement configuration; or receive a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, the first indication information is further used to instruct the UE to perform measurement and/or perform measurement reporting based on a measurement configuration enabled.

In an embodiment, the first indication information is further used to instruct the UE to stop measurement and/or measurement reporting currently performed that is associated with the at least one measurement configuration.

In an embodiment, the device further includes: a second transceiving module, configured to transmit a measurement report, where the measurement report carries second indication information, and the second indication information indicates at least one of: a currently enabled measurement configuration of the UE; or a currently disabled measurement configuration of the UE.

In an embodiment, the at least one measurement configuration includes at least one of: one or more measurement identifiers; one or more measurement objects; one or more reporting configurations; one or more measurement gap configurations; or one or more synchronization signal block measurement timing configurations (SMTCs).

According to a fifth aspect of an embodiment of the present invention, there is provided a communication device, including: a processor; and a memory configured to store instructions executable by the processor; where the processor is configured to: implement the information transmission device according to the first aspect or the second aspect when executing the executable instructions.

According to a sixth aspect of an embodiment of the present invention, there is provided a computer storage medium, where the computer storage medium stores a computer executable program, and the executable program, when executed by a processor, causes the information transmission device according to the first aspect or the second aspect to be implemented.

An information transmission method and device, a communication device and a storage medium are provided by the embodiments of the present invention. The network device transmits first indication information, where the first indication information is used for the UE to determine whether at least one measurement configuration is enabled. Whether the measurement configuration is enabled is determined according to the enabling/disabling condition, which can meet the requirement for measurement configurations in different situations and can make the measurement configuration suitable for different scenarios.

It should be understood that the foregoing general description and the following detailed description are illustrative and explanatory only and are not to limit the embodiments of the present invention.

### BRIEF DESCRIPTION OF THE DRAWINGS

The accompanying drawings, which are incorporated into the specification and constitute a part of the specification, illustrate embodiments consistent with the present invention and are used to explain, in combination with the description, principles of the embodiments of the present invention.
FIG. 1 is a schematic structural diagram of a wireless communication system according to an illustrative embodiment.
FIG. 2 is a schematic diagram of a measurement procedure according to an illustrative embodiment.
FIG. 3 is a schematic flow chart of an information transmission method according to an illustrative embodiment.
FIG. 4 is a schematic flow chart of an information transmission method according to an illustrative embodiment.
FIG. 5 is a schematic flow chart of an information transmission method according to an illustrative embodiment.
FIG. 6 is a schematic flow chart of an information transmission method according to an illustrative embodiment.
FIG. 7 is a schematic flow chart of an information transmission method according to an illustrative embodiment.
FIG. 8 is a schematic flow chart of an information transmission method according to an illustrative embodiment.
FIG. 9 is a schematic flow chart of an information transmission method according to an illustrative embodiment.
FIG. 10 is a block diagram of an information transmission device according to an illustrative embodiment.
FIG. 11 is a block diagram of an information transmission device according to an illustrative embodiment.
FIG. 12 is a block diagram of a UE according to an illustrative embodiment.
FIG. 13 is a block diagram of a base station according to an illustrative embodiment.

### DETAILED DESCRIPTION

Illustrative embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present invention. They are merely examples of devices and methods consistent with some aspects of the embodiments of the present invention as recited in the appended claims.

It should be understood that terms such as "first", "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

It will be appreciated that although terms such as first, second and third may be used to describe various information in the embodiments of the present invention, these information should not be limited to these terms. These terms are just used to distinguish the same type of information from each other. For example, without departing from the scope of the embodiments of the present invention, first indication information may also be referred to as second information, and similarly, second information may also be referred to as first indication information. Depending on the context, the word "if" used herein may be interpreted as "at the time of" or "when" or "in response to determining".

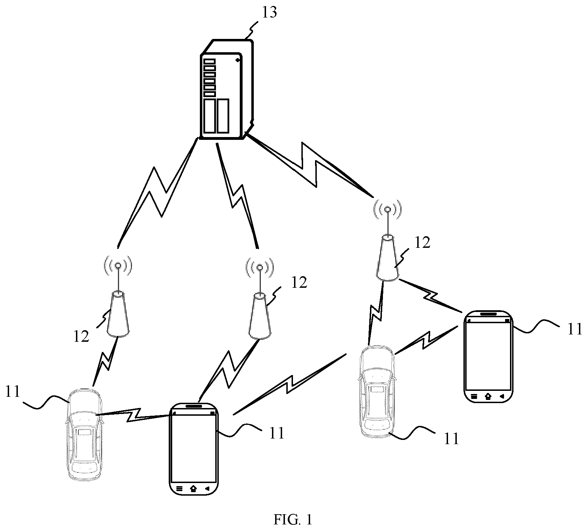

Referring to FIG. 1, FIG. 1 shows a schematic structural diagram of a wireless communication system provided by an embodiment of the present invention. As shown in FIG. 1, the wireless communication system may include at least one terminal 11 and at least one base station 12.

The terminal 11 may be a device that provides voice and/or data connectivity to a user. The terminal 11 may communicate with one or more core networks via a radio access network (RAN), and the terminal 11 may be a terminal in an Internet of Things (IoT), such as a sensor device, a mobile phone (or referred to as a "cellular" phone) and a computer including an IoT terminal device. For example, the terminal 11 may be a fixed device, a portable device, a pocket device, a hand-held device, a computer built-in device or a vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment. Alternatively, the terminal 11 may also be a device of an unmanned aerial vehicle. Alternatively, the terminal 11 may also be a vehicle-mounted device, for example, it may be a trip computer with a wireless communication function, or a wireless communication device connected externally to the trip computer. Alternatively, the terminal 11 may also be a roadside device, for example, it may be a streetlamp, a signal lamp, or other roadside devices with a wireless communication function.

The base station 12 may be a network-side device in the wireless communication system. The wireless communication system may be the 4th generation (4G) mobile communication system, also referred to as a long term evolution (LTE) system, or the wireless communication system may be a 5G system, also referred to as a new radio (NR) system or 5G NR system. Alternatively, the wireless communication system may be a next-generation system of the 5G system. An access network in the 5G system is referred to as new generation-radio access network (NG-RAN).

The base station 12 may be an evolved node B (eNB) in a 4G system. Alternatively, the base station 12 may be a next-generation node B (gNB) adopting a centralized and distributed architecture in the 5G system. When the base station 12 adopts the centralized and distributed architecture, it generally includes a central unit (CU) and at least two distribute d units (DU). The centralized unit is provided with a protocol stack of a packet data convergence protocol (PDCP) layer, a radio link control (RLC) layer, and a media access control (MAC) layer. The distributed unit is provided with a physical (PHY) layer protocol stack. The specific implementation of the base station 12 is not limited in the embodiments of the present invention.

A wireless connection may be established between the base station 12 and the terminal 11 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, E2E (End to End) connection may also be established between the terminals 11, such as V2V (vehicle to vehicle) communication, V2I (vehicle to Infrastructure) communication, and V2P (vehicle to pedestrian) communication in vehicle to everything (V2X) communication.

In some embodiments, the wireless communication system may further include a network management device 13.

Several base stations 12 are connected to the network management device 13. The network management device 13 may be a core network device in the wireless communication system, for example, the network management device 13 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 13 is not limited in the embodiments of the present invention.

In order to facilitate the understanding for those skilled in the art, embodiments of the present invention include multiple implementations to clearly illustrate technical solutions of the embodiments of the present invention. Of course, those skilled in the art may understand that multiple embodiments provided by the embodiments of the present invention may be executed separately, or may be executed together with methods of other embodiments of the present invention, or may be executed together with some methods in other related technologies separately or in combination, which are not limited by the embodiments of the present invention.

The measurement process may include measurement configuration, measurement execution and measurement reporting.

### 1. Measurement configuration

For example, a network may perform measurement configuration for a UE through an RRC reconfiguration procedure, where the measurement configuration includes at least one of the following: a measurement object (such as measObject), a reporting configuration (such as ReportConfig), a measurement identifier (such as measID), a measurement start threshold, a measurement gap and measurement gap allocation.

Each set of measurements is associated and configured in accordance with an index, and a main index is a measurement identifier. All measurements are sorted in full accordance with an association relationship of measurement identifiers and are transmitted to a UE by a network side. Each measurement identifier is associated with both a measurement object identifier and a reporting configuration identifier, which represents a combination of a measurement object that needs to be measured and a reporting configuration. The measurement object and the reporting configuration that are not associated with any measurement identifier may also be transmitted to the UE, but the UE will not perform any form of measurement for the configuration. Each measurement identifier may only be associated with one measurement object identifier and one reporting configuration identifier.

### 2. Measurement execution

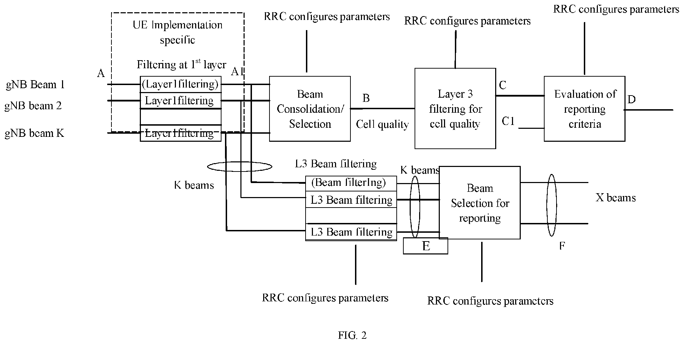

A high-level measurement model is shown in FIG. 2.

During the measurement procedure, L1 and L3 beam filtering may be applied and a filtered signal may be measured. Finally, an evaluation report may be obtained. During the measurement procedure, a measurement parameter may be configured through an RRC signaling.

### 3. Measurement reporting

The UE performs measurement according to the measurement configuration transmitted by the network, and evaluates a reporting criteria after obtaining a cell-level measurement result. Generally, the reporting criteria for measurement reporting may include event-triggered reporting and periodic reporting. The reporting evaluation criteria to be used is determined based on the reporting configuration transmitted to the UE.

### (1) Event trigger reporting mode

RRM events supported by an NR system include events A1/A2/A3/A4/A5/A6 and events B1/B2 of different RATs. The six measurement events in the same system are described as follows.

Event A1: a measurement result of a serving cell becomes higher than a threshold.

Event A2: the measurement result of the serving cell becomes lower than the threshold.

Event A3: a measurement result of a neighbor cell becomes better than a measurement result of a SpCell (reporting criteria evaluation applies to either PCell or PSCell).

Event A4: the measurement result of the neighboring cell becomes higher than the threshold.

Event A5: the measurement result of the SpCell (e.g., PCell or PSCell) becomes lower than threshold 1, while the measurement result of the neighboring cell becomes higher than threshold 2.

Event A6: the measurement result of the neighboring cell becomes better than a measurement result of a secondary serving cell (e.g., SCell).

Different radio access technology (RAT) measurement events supported by the current NR system are described as follows.
Event B1: a measurement result of an inter-RAT neighboring cell becomes higher than a threshold;
Event B2: a measurement result of a primary serving cell (e.g., PCell) becomes lower than threshold 1, while the measurement result of the hetero-RAT neighboring cell becomes higher than threshold 2.

### (2) Periodic reporting mode

If the trigger type is "periodic", when the maximum number of reports is reached, the UE will autonomously delete a corresponding measurement identifier from a variable of a measurement configuration. A reporting configuration corresponding to a reporting criteria of a "periodic" trigger is: the type of the trigger is "periodic"; the number of reports is greater than 1; a reporting interval is enabled, and the network sets a timer for a reporting period according to a configured interval parameter.

If a reporting condition is met, the UE will trigger reporting of a measurement report. The content of the measurement report includes the following aspects:
① measurement identifier: based on the identifier, the network obtains various information from a measurement configuration stored in itself, including a measurement object corresponding to this report, a measurement event threshold for an event trigger, a purpose of periodic trigger, etc.;
② all available measurement results of a serving cell;
③ the best measurement result of a neighboring cell on each service frequency point may be optionally carried according to the reporting configuration;
④ a measurement result of a neighboring cell that meets a trigger condition.

### 2. Unmanned Aerial Vehicle (UAV)

In recent years, UAV-based services, such as drones, have expanded to include diverse drone operations, personal entertainment of flight experience, cargo delivery, etc. As the foundation of these services, remote control and data transmission capabilities are critical enhancement areas of interest to service providers/operators and drone manufacturers.

With increasingly diversified UAV applications, the lower latency and the higher transmission rate are required for UAV communications. Therefore, NR UAV needs to be enhanced based on LTE UAV.

In UAV, due to the altitude of a UAV UE, the UAV UE has more frequent line-of-sight (LoS) connections compared to a ground UE. Consequently, signal measurements for aerial UEs show less distance -dependent variation, enabling the aerial UE to receive a signal from a distant base station. This makes the UAV UE suffer from or cause more serious interference than the ground UE. This will also increase the measurement report of the aerial UE, which greatly challenges the mobility management of the UAV UE.

The altitude of the UAV UE may affect a channel condition. There are more LOS paths for the aerial UE, so a signal strength is less affected by a distance, causing a minimal difference of signal strengths between a serving cell and a neighboring cell, which makes the UAV UE prone to ping-pong effect and triggers frequent measurement reports. It is necessary to optimize its measurement configuration method.

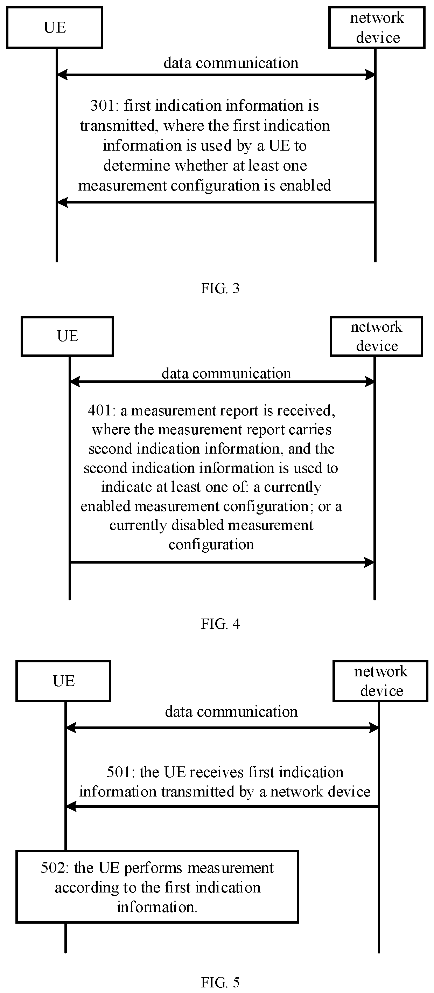

As shown in FIG. 3, an illustrative embodiment provides an information transmission method, which may be executed by a network device, and may include the following steps.

Step 301, first indication information is transmitted, where the first indication information is used by a UE to determine whether at least one measurement configuration is enabled.

The network device may include a core network device and/or an access network device.

In a possible implementation, the UE includes a UAV UE.

In a possible implementation, the first indication information may be configured by the core network device and/or the access network device and transmitted to the UE.

The measurement configuration may be transmitted by the network device to the UE. After receiving the measurement configuration, the UE may perform measurement execution and/or measurement report according to the measurement configuration.

For example, there are more LOS paths between the aerial UE and the network device, to enable a signal strength to be less affected by the distance, causing minimal signal strength differences between a serving cell and a neighboring cell, which makes the UAV UE prone to ping-pong effect and triggers frequent measurement reports.

In a possible implementation, the first indication information may explicitly indicate whether the measurement configuration is enabled.

In a possible implementation, the first indication information may indicate, to the UE, a control policy for determining whether the measurement configuration is enabled, and the UE determines whether the measurement configuration is enabled based on the control policy.

In a possible implementation, in response to determining that the measurement configuration is enabled, the UE may perform measurement and measurement reporting according to the measurement configuration.

In an embodiment, the measurement configuration includes at least one of: one or more measurement identifiers; one or more measurement objects; one or more reporting configurations; one or more measurement gap configurations; or one or more synchronization signal block measurement timing configurations (SMTCs).

In the present application, the measurement configuration is not limited to including a measurement identifier, a measurement object, a reporting configuration, a Gap configuration, or a synchronization signal block measurement timing configuration (SMTC). The measurement configuration may also include multiple measurement identifiers, multiple measurement objects, multiple reporting configurations, multiple Gap configurations, or multiple synchronization signal block measurement timing configurations (SMTCs). In this way, a measurement range covered by the measurement configuration may be expanded.

In an example, if the measurement configuration includes one or more measurement Gap configurations, the UE performs measurement according to the one or more measurement Gap configurations.

If the UE enables one or more measurement identifiers, the UE performs measurement on measurement object(s) associated with the one or more measurement identifiers, and performs measurement reporting according to a reporting configuration associated with each measurement identifier.

If the UE enables one or more reporting configurations, the UE performs measurements corresponding to measurement identifiers associated with the one or more reporting configurations, and performs corresponding reporting configurations.

In this way, the UE can determine whether at least one measurement configuration is enabled according to the first indication information, thereby avoiding invalid measurements and measurement reports, reducing resource waste and the number of measurement reports, and improving measurement efficiency.

In an embodiment, the first indication information indicates one of: whether one or more of the at least one measurement configuration is enabled; or whether each of the at least one measurement configuration is enabled.

The first indication information corresponds to all measurement configurations stored in the UE, and may also correspond to part of the measurement configurations, or may also correspond to a specific one of the measurement configurations.

In a possible implementation, the first indication information may indicate that all the measurement configurations of the UE are disabled.

In a possible implementation, the first indication information may indicate that all the measurement configurations of the UE are enabled.

In a possible implementation, the first indication information may indicate that part of the measurement configurations of the UE is disabled.

In a possible implementation, the first indication information may indicate that part of the measurement configurations of the UE is enabled.

In a possible implementation, the first indication information may indicate whether one or more configurations in the measurement configurations are enabled.

In an example, the first indication information may indicate whether one or more sub-configurations in the measurement configuration are enabled by indicating identifiers of different sub-configurations in the measurement configuration.

For example, the first indication information may indicate whether different configurations are enabled by indicating an identifier of a measurement object in the measurement configuration, or a measurement identifier, or an identifier of a reporting configuration.

The first indication information indicates whether the measurement configuration is enabled, thereby improving the control capability of the measurement configuration and reducing invalid measurement configurations.

In an embodiment, the first indication information indicating whether one or more of measurement configurations are enabled includes: the first indication information is associated with an identifier of the one or more of measurement configurations; and/or the measurement configuration includes an identifier of the first indication information.

In a possible implementation, one measurement configuration has a unique identifier, which uniquely indicates the measurement configuration.

In a possible implementation, one first indication information has a unique identifier, which uniquely indicates the first indication information.

The first indication information is associated with an identifier of a measurement configuration, and whether the measurement configuration corresponding to the identifier is enabled is indicated by the first indication information.

The identifier of the first indication information indicating whether the measurement configuration is enabled may be included in the measurement configuration to achieve a corresponding relationship.

In an embodiment, the first indication information indicates: an enabling/disabling condition for whether one or more of the at least one measurement configuration is enabled, or an enabling/disabling condition for whether each of the at least one measurement configuration is enabled.

The enabling/disabling condition may explicitly indicate whether the measurement configuration is enabled.

In a possible implementation, the enabling/disabling condition is used for the UE to make a decision, and whether the measurement configuration is enabled is determined according to a result of the decision.

The enabling/disabling condition may include at least one condition for the UE to make a decision, so that the UE may make the decision and may determine whether the measurement configuration is enabled according to the result of the decision.

In an example, a threshold corresponding to a predetermined determination parameter may be provided, and the UE determines whether the measurement configuration is enabled according to a comparison result between the predetermined determination parameter and the threshold. The predetermined determination parameter may be associated with the UE. For example, the predetermined determination parameter may be a speed of the UE.

In a possible implementation, the enabling/disabling condition may include an enabling condition and/or a disabling condition. When the enabling condition is met, the measurement configuration is enabled, otherwise the measurement configuration is disabled. When the disabling condition is met, the measurement configuration is disabled, otherwise the measurement configuration is enabled.

The first indication information indicates, to the UE, the enabling/disabling condition of a corresponding measurement configuration. Enabling/disabling conditions of different measurement configurations may not be completely the same, or may be the same, or may be completely different from each other.

In an example, different measurement configurations may correspond to a same enabling/disabling condition and/or a same enabling/disabling condition configuration.

The enabling/disabling condition may include: an enabling condition of the measurement configuration and/or a disabling condition of the measurement configuration.

For example, if the enabling condition is met, the measurement configuration is enabled; otherwise, the measurement configuration is disabled.

For example, if the disabling condition is met, the measurement configuration is disabled; otherwise, the measurement configuration is enabled.

The enabling/disabling condition may correspond to all of measurement configurations stored in the UE, may correspond to part of the measurement configurations, or may correspond to a specific one of the measurement configurations.

In a possible implementation, the enabling/disabling condition may correspond to all measurement configurations stored in the UE. When enabling of the measurement configuration is determined according to the enabling/disabling condition, all measurement configurations stored in the UE are enabled; when disabling of the measurement configuration is determined according to the enabling/disabling condition, all measurement configurations stored in the UE are disabled, and the UE does not start measurement for all the measurement configurations.

In a possible implementation, the enabling/disabling condition may correspond to a part of measurement configurations stored by the UE, and one enabling/disabling condition may be associated with one or more measurement configurations (for example, a configuration of the enabling condition may include an identifier of the associated measurement configuration, or the measurement configuration associated with the enabling condition includes an identifier of the enabling condition). When it is determined according to the enabling/disabling condition that multiple measurement configurations are enabled, the multiple measurement configurations stored by the UE are enabled; when it is determined according to the enabling/disabling condition that multiple measurement configurations are disabled, the multiple measurement configurations stored by the UE are disabled.

In a possible implementation, the enabling/disabling condition may correspond to a specific measurement configuration, and an enabling/disabling condition may be associated only with the specific measurement configuration (for example, the enabling/disabling condition is associated with an identifier of the specific measurement configuration), or a configuration or related indication information of the enabling/disabling condition is included in the specific measurement configuration. When multiple measurement configurations are determined to be enabled according to the enabling/disabling condition, the specific measurement configuration is enabled; when multiple measurement configurations are determined to be disabled according to the enabling/disabling condition, the specific measurement configuration is disabled.

Whether the measurement configuration is enabled is determined according to the enabling/disabling condition, which can meet the requirement for measurement configurations in different situations and can enable the measurement configuration to be suitable for different scenarios.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the measurement configuration including an identifier of the enabling/disabling condition.

In a possible implementation, one measurement configuration has a unique identifier, which uniquely indicates the measurement configuration.

In a possible implementation, one enabling/disabling condition has a unique identifier for uniquely indicating the enabling/disabling condition.

The enabling/disabling condition is associated with an identifier of the measurement configuration. Whether the measurement configuration corresponding to the identifier is enabled is determined according to the enabling/disabling condition.

The identifier of the enabling/disabling condition for determining whether the measurement configuration is enabled may be included in the measurement configuration, so as to achieve the corresponding relationship. In an embodiment, the enabling/disabling condition is associated with at least one of: a height of the UE; a speed of the UE; a location of the UE; a movement trajectory of the UE; or time information.

The enabling/disabling condition may be a condition for determining whether the measurement configuration is enabled based on the height/speed/location/time/trajectory of the UE. Here, the determination condition may include, but not limited to, actual values of the height/speed/location/time/trajectory, or a rate of change of the height/speed/location/time/trajectory.

In a possible implementation, a height-based condition may be that the height of the UE is higher than (or lower than) a height threshold, and/or a height change rate is greater than (or less than) a threshold for the height change rate.

In a possible implementation, the speed-based condition (which may include vertical and/or horizontal and/or 3D speed) may be that the speed of the UE is greater than (or less than) a speed threshold, and/or a speed change rate is greater than (or less than) a threshold for the speed change rate.

In a possible implementation, the location of the UE may be a coordinate location of the UE, or a relative location based on a predetermined reference point. For example, the location of the UE may be a distance between the UE and a base station.

In an example, the location-based condition may be that a distance between the UE and a location of a cell reference (e.g., a location of the base station) is greater than (or less than) a distance threshold, and/or a distance change rate is greater than (or less than) a threshold for the distance change rate.

In a possible implementation, the time information may indicate a time when the measurement configuration is enabled and/or is disabled. The time-based condition may be that a measured time is greater than (or less than) a threshold; or that the measured time is within a specific time range.

In a possible implementation, the trajectory-based condition may be an offset between an actual movement trajectory of the UE and a predetermined trajectory, and whether the measurement configuration is enabled may be determined based on the offset of the trajectory. The trajectory-based condition may be a corresponding relationship between the movement trajectory of the UE and whether the measurement configuration is enabled. For example, a movement trajectory at a first height may correspond to disabling of the measurement configuration, and a movement trajectory at a second height may correspond to enabling of the measurement configuration, and the first height is different from the second height.

As shown in FIG. 4, an illustrative embodiment provides an information transmission method, which may be executed by a network device, and may include the following steps.

In step 401, a measurement report is received, where the measurement report carries second indication information, and the second indication information indicates at least one of: a currently enabled measurement configuration; or a currently disabled measurement configuration.

The UE may report an activation/deactivation state of its own measurement configuration to the network side through the measurement report, thereby improving information synchronization between the UE and network device.

In an embodiment, the transmitting the first indication information includes: transmitting a first message, where the first message includes the first indication information and the at least one measurement configuration; or transmitting a first message, where the first message includes the at least one measurement configuration, and the at least one measurement configuration includes the first indication information.

The first indication information may be carried in the measurement configuration.

In a possible implementation, the first indication information determines whether the measurement configuration carrying the first indication information is enabled.

In a possible implementation, the first indication information determines whether the measurement configuration carrying the first indication information and/or another measurement configuration are enabled.

In an example, the first indication information may correspond to a specific measurement configuration, and the first indication information may be included in a specific configuration of the measurement configuration, for example, a reporting configuration. When the enabling condition is met, the reporting configuration is enabled.

In an example, the first indication information may be included in a corresponding measurement configuration, and indicates whether the specific configuration information is enabled (or deactivated). For example, if a value of the first indication information is 1, the measurement configuration is enabled; otherwise it is disabled.

In an embodiment, the first indication information is carried in one of: a radio resource control (RRC) message; a medium-access-control control element (MAC CE); or downlink control information (DCI).

In a possible implementation, the first indication information may be transmitted to the UE separately via the RRC message or the MAC CE or the DCI.

In a possible implementation, the first indication information and the measurement configuration may be transmitted to the UE together through the RRC message or the MAC CE or the DCI.

In an embodiment, the first indication information is further used to instruct the UE to perform measurement and/or perform measurement reporting based on a measurement configuration enabled.

In response to determining that a certain measurement configuration is enabled according to the first indication information, the UE performs measurement and/or performs measurement reporting corresponding to a corresponding measurement configuration.

In an embodiment, the first indication information is further used to instruct the UE to stop measurement and/or measurement reporting currently performed that is associated with the at least one measurement configuration.

In response to determining that a certain measurement configuration is disabled according to the first indication information, the UE stops corresponding measurement and/or measurement reporting if the measurement and/or the measurement reporting corresponding to the measurement configuration is being performed.

In response to determining that a certain measurement configuration is disabled according to the first indication information, the UE does not perform corresponding measurement and/or measurement reporting.

As shown in FIG. 5, FIG. 5 is a schematic flow chart of a measurement method provided in an embodiment of the present application, and the following steps are included.

In step 501, a UE receives first indication information transmitted by a network device. The first indication information indicates at least one of: used to instruct the UE to start a first measurement, where the first measurement corresponds to a first measurement configuration (i.e., the measurement configuration in the above embodiments); instructs the UE not to start the first measurement or stop the first measurement, where the first measurement corresponds to the first measurement configuration; indicates that the first measurement configuration of the UE is enabled; indicates that the first measurement configuration of the first UE is disabled; indicates a condition in which the first measurement configuration of the UE is enabled; indicates a condition in which the first measurement configuration of the UE is disabled; indicates that the first measurement configuration of the UE is enabled; or indicates the first measurement configuration is deactivated.

In some embodiments, the number of first measurement configurations is one or more.

In a specific example, the first measurement configuration is all measurement configurations configured by the network device for the UE.

In some embodiments, each first measurement configuration may include at least one of: one or more measurement identifiers; one or more measurement objects; one or more reporting configurations; one or more measurement gap (Gap) configurations; one or more synchronization signal block measurement timing configurations (SMTCs). It may be understood that the first measurement configuration may also include other contents.

Here, description is made by taking an example that the first indication information indicates that one or more first measurement configurations are enabled.

In a possible implementation, the first indication information indicates whether all first measurement configurations configured for the UE are enabled or disabled.

In another possible implementation, the first indication information includes one or more measurement identifiers. Then, the first indication information indicates whether a first measurement configuration corresponding to the one or more measurement identifiers is enabled/disabled.

In another possible implementation, the first indication information is included in one of the first measurement configurations. Then the first indication information indicates activation/enabling of the first measurement configuration where the first indication information is located; or to indicate deactivation/disabling of the first measureme nt configuration where the first indication information is located.

In another possible implementation, the first indication message is included in a first message transmitted by the network device to the UE, and the first message also includes the first measurement configuration; the first indication message indicates activation/enabling of the first measurement configuration in the first message; or to indicate deactivation/disabling of the first measurement configuration in the first message.

The first indication information indicating an enabling condition/disabling condition of one or more first measurement configuration is taken as an example for description.

In a possible implementation, the first indication information indicates an enabling condition/disabling condition of all first measurement configurations configured for the UE.

In another possible implementation, the first indication information includes one or more measurement identifiers. The first indication information indicates an enabling condition/disabling condition of a first measurement configuration corresponding to the one or more measurement identifiers.

In another possible implementation, the first indication information includes one or more enabling conditions/disabling conditions. Each enabling condition/disabling condition corresponds to one condition identifier. One of the first measurement configurations includes one or more condition identifiers, and the enabling condition/disabling condition corresponding to the one or more condition identifiers correspond to the first measurement configuration. Then, the one or more condition identifiers indicate(s) the enabling condition/disabling condition corresponding to the first measurement configuration. In an example, a reporting configuration in the first measurement configuration includes one or more condition identifiers, and then the one or more condition identifiers indicate(s) the enabling condition/disabling condition corresponding to the first measurement configuration.

In another possible implementation, the first indication message is included in a first message transmitted by the network device to the UE, the first message also includes a first measurement configuration, and the first indication message indicates an enabling condition/disabling condition of the first measurement configuration in the first message.

In an embodiment, the enabling condition or the disabling condition indicated in the first indication information may include at least one of the following items.

UE height-based condition: for example, if a height of the UE is higher than a height threshold, the first measurement configuration is enabled; if the height of the UE is lower than the height threshold, the first measurement configuration is disabled. If a height change rate is greater than a height change rate threshold, the first measurement configuration is enabled; if the height change rate is less than the height change rate threshold, the first measurement configuration is disabled.

UE speed-based condition: for example, if a speed of the UE is greater than a speed threshold, the first measurement configuration is enabled; if the speed of the UE is less than the speed threshold, the first measurement configuration is disabled. If a speed change rate is greater than a speed change rate threshold, the first measurement configuration is enabled; if the speed change rate is less than the speed change rate threshold, the first measurement configuration is disabled.

UE location-based condition: for example, if a distance between the UE and a location of a cell reference (e.g., a location of a base station) is greater than a distance threshold, the first measurement configuration is enabled; if the distance between the UE and the location of the cell reference (e.g., the location of the base station) is less than the distance threshold, the first measurement configuration is disabled. If a distance change rate is greater than a distance change rate threshold, the first measurement configuration is enabled; if the distance change rate is less than the distance change rate threshold, the first measurement configuration is disabled.

UE time-based condition: for example, if a measured time is greater than a threshold, the first measurement configuration is enabled; if the measured time is less than the threshold, the first measurement configuration is disabled. If the measured time is within a specific time range, the first measurement configuration is enabled; if the measured time is outside the specific time range, the first measurement configuration is disabled.

UE trajectory-based condition: for example, if an offset value between an actual movement trajectory and a predetermined trajectory is greater than a threshold, the first measurement configuration is enabled; if the offset value between the actual movement trajectory and the predetermined trajectory is less than the threshold, the first measurement configuration is disabled.

In some embodiments, the first indication information is carried in any one of messages: an RRC message; an MAC CE; or a downlink control information (DCI).

In an embodiment, the UE is a UAV.

In step 502, the UE performs measurement according to the first indication information.

In some embodiments, the first measurement is started, specifically, the UE performs the first measurement according to the first measurement configuration.

If the first measurement configuration is a measurement Gap configuration, the UE performs measurement according to measurement Gap configuration information.

If the UE enables one or more measurement identifiers in a first measurement configuration, the UE performs measurement on a measurement object associated with the one or more measurement identifiers and performs measurement reporting according to a reporting configuration associated with the one or more measurement identifiers.

If the UE enables one or more reporting configurations in the first measurement configuration, and if there is an associated measurement identifier, the UE performs a corresponding measurement and performs a corresponding reporting configuration.

In some embodiments, the first measurement is not started. If the first measurement and/or measurement reporting corresponding to the first measurement configuration is being performed, the corresponding first measurement and/or measurement report is stopped; or the corresponding first measurement and/or measurement report is not started.

It should be noted that for other contents of the process shown in FIG. 5, reference can be made to the relevant contents in the previous embodiment, which will not be repeated here.

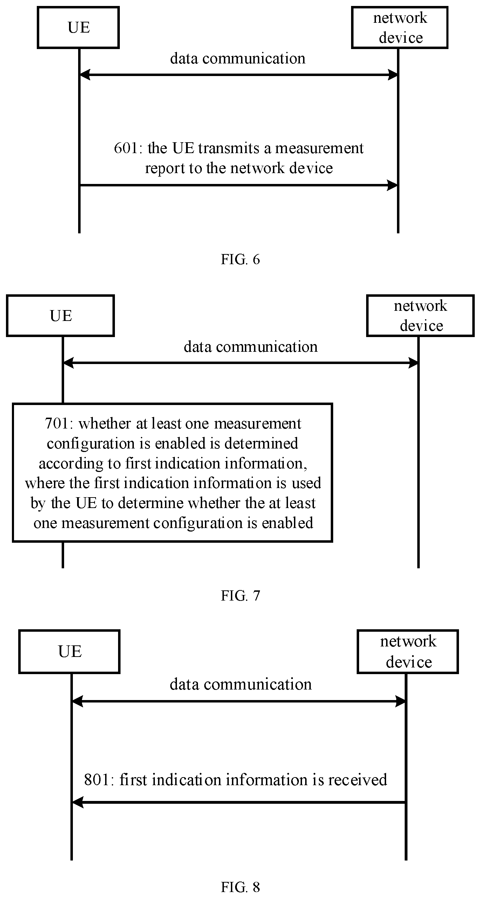

As shown in FIG. 6, FIG. 6 is a schematic flow chart of an information transmission method according to an illustrative embodiment, and the following steps are included.

In step 601, a UE transmits a measurement report to a network device.

In some embodiments, the UE may execute this step after executing the above steps 501 and 502.

In other embodiments, the UE may also perform measurement by using other methods, that is, perform this step, instead of performing the above steps 501 and 502.

In some other embodiments, the measurement report includes, but is not limited to, at least one of: a reference signal receiving power (RSRP); a reference signal receiving quality (RSRQ); or a signal to interference plus noise ratio (SINR).

It should be noted that for other contents of the process shown in FIG. 6, reference can be made to the relevant contents in the previous embodiment, which will not be repeated here.

As shown in FIG. 7, an illustrative embodiment provides an information transmission method, which may be executed by a user equipment (UE), and may include the following steps.

In step 701, whether at least one measurement configuration is enabled is determined according to first indication information, where the first indication information is used by the UE to determine whether the at least one measurement configuration is enabled.

The network device may include a core network device and/or an access network device.

In a possible implementation, the UE includes a UAV UE.

In a possible implementation, the first indication information may be defined by a protocol.

In a possible implementation, the first indication information may be pre-stored in the UE.

As shown in FIG. 8, an illustrative embodiment provides an information transmission method, which may be executed by a user equipment (UE), and may include the following steps.

In step 801, first indication information is received.

In a possible implementation, the first indication information may be configured by a core network device and/or an access network device, and transmitted to the UE.

A measurement configuration may be transmitted by a network device to the UE. After receiving the measurement configuration, the UE may perform measurement and/or measurement reporting according to the measurement configuration.

In the related technologies, when a UE receives a measurement configuration, it indicates that the measurement configuration needs to be executed, and the network device cannot control whether the UE executes the measurement configuration.

For example, there are more LOS paths between the aerial UE and the network device, to enable a signal strength to be less affected by the distance, causing minimal signal strength differences between a serving cell and a neighboring cell, which makes the UAV UE prone to ping-pong effect and triggers frequent measurement reports.

In a possible implementation, the first indication information may explicitly indicate whether the measurement configuration is enabled.

In a possible implementation, the first indication information may indicate, to the UE, a control policy for determining whether the measurement configuration is enabled, and the UE determines whether the measurement configuration is enabled based on the control policy.

In a possible implementation, in response to determining that the measurement configuration is enabled, the UE may perform measurement and measurement reporting according to the measurement configuration.

In an embodiment, the measurement configuration includes at least one of: one or more measurement identifiers; one or more measurement objects; one or more reporting configurations; one or more measurement gap (Gap) configurations; or one or more synchronization signal block measurement timing configurations (SMTCs).

In the present application, the measurement configuration may not be limited to including a measurement identifier, a measurement object, a reporting configuration, a Gap configuration, or a synchronization signal block measurement timing configuration (SMTC). The measurement configuration may also include multiple measurement identifiers, multiple measurement objects, multiple reporting configurations, multiple Gap configurations, or multiple synchronization signal block measurement timing configurations (SMTCs). In this way, a measurement range covered by the measurement configuration can be expanded.

In an example, if the measurement configuration includes one or more measurement Gap configurations, the UE performs measurement according to the one or more measurement Gap configurations.

If the UE enables one or more measurement identifiers, the UE performs measurement on measurement object(s) associated with the one or more measurement identifiers, and performs measurement reporting according to a reporting configuration associated with each measurement identifier.

If the UE enables one or more reporting configurations, the UE performs measurement corresponding to measurement identifier(s) associated with the one or more reporting configurations, and performs corresponding reporting configurations.

In this way, the UE determines whether at least one measurement configuration is enabled according to the first indication information, thereby avoiding invalid measurements and measurement reports, reducing resource waste and the number of measurement reports, and improving measurement efficiency.

In an embodiment, the first indication information indicates one of: whether one or more of the at least one measurement configuration is enabled; or whether each of the at least one measurement configuration is enabled.

The first indication information corresponds to all measurement configurations stored in the UE, and may also correspond to part of the measurement configurations, or may also correspond to a specific one of the measurement configurations.

In a possible implementation, the first indication information may indicate that all the measurement configurations of the UE are disabled.

In a possible implementation, the first indication information may indicate that all the measurement configurations of the UE are enabled.

In a possible implementation, the first indication information may indicate that part of the measurement configurations of the UE is disabled.

In a possible implementation, the first indication information may indicate that part of the measurement configurations of the UE is enabled.

In a possible implementation, the first indication information may indicate whether one or more configurations in the measurement configurations are enabled.

In an example, the first indication information may indicate whether one or more sub-configurations in the measurement configuration are enabled by indicating identifiers of different sub-configurations in the measurement configuration.

For example, the first indication information may indicate whether different configurations are enabled by indicating an identifier of a measurement object in the measurement configuration, or a measurement identifier, or an identifier of a reporting configuration.

The first indication information indicates whether the measurement configuration is enabled, thereby improving the control capability of the measurement configuration and reducing invalid measurement configurations.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In a possible implementation, one measurement configuration has a unique identifier, which uniquely indicates the measurement configuration.

In a possible implementation, one first indication information has a unique identifier, which uniquely indicates the first indication information.

The first indication information is associated with an identifier of a measurement configuration, and whether the measurement configuration corresponding to the identifier is enabled is indicated by the first indication information.

The identifier of the first indication information indicating whether the measurement configuration is enabled may be included in the measurement configuration to achieve a corresponding relationship.

In an embodiment, the first indication information indicates: an enabling/disabling condition for whether one or more of the at least one measurement configuration is enabled, or an enabling/disabling condition for whether each of the at least one measurement configuration is enabled.

The enabling/disabling condition may explicitly indicate whether the measurement configuration is enabled.

In a possible implementation, the enabling/disabling condition is used for the UE to make a decision, and whether the measurement configuration is enabled is determined according to a result of the decision.

The enabling/disabling condition may include at least one condition for the UE to make a decision, so that the UE may make the decision and may determine whether the measurement configuration is enabled according to the result of the decision.

In an example, a threshold corresponding to a predetermined determination parameter may be provided, and the UE determines whether the measurement configuration is enabled according to a comparison result between the predetermined determination parameter and the threshold. The predetermined determination parameter may be associated with the UE. For example, the predetermined determination parameter may be a speed of the UE.

In a possible implementation, the enabling/disabling condition may include an enabling condition and/or a disabling condition. When the enabling condition is met, the measurement configuration is enabled, otherwise the measurement configuration is disabled. When the disabling condition is met, the measurement configuration is disabled, otherwise the measurement configuration is enabled.

The first indication information indicates, to the UE, an enabling/disabling condition of a corresponding measurement configuration. Enabling/disabling conditions of different measurement configurations may not be completely the same, or may be the same, or may be completely different from each other.

In an example, different measurement configurations may correspond to a same enabling/disabling condition and/or a same enabling/disabling condition configuration. The enabling/disabling condition may include: an enabling condition of the measurement configuration and/or a disabling condition of the measurement configuration.

For example, when the enabling condition is met, the measurement configuration is enabled; otherwise, the measurement configuration is disabled.

For example, when the disabling condition is met, the measurement configuration is disabled; otherwise, the measurement configuration is enabled.

The enabling/disabling condition may correspond to all of measurement configurations stored in the UE, may correspond to part of the measurement configurations, or may correspond to a specific one of the measurement configurations.

In a possible implementation, the enabling/disabling condition may correspond to all measurement configurations stored in the UE. When enabling of the measurement configuration is determined according to the enabling/disabling condition, all the measurement configurations stored in the UE are enabled; when disabling of the measurement configuration is determined according to the enabling/disabling condition, all the measurement configurations stored in the UE are disabled, and the UE does not perform measurement for all the measurement configurations.

In a possible implementation, the enabling/disabling condition may correspond to part of measurement configurations stored by the UE, and one enabling/disabling condition may be associated with one or more measurement configurations (for example, a configuration of the enabling condition may include an identifier of the associated measurement configuration, or the measurement configuration associated with the enabling condition includes an identifier of the enabling condition). When it is determined according to the enabling/disabling condition that multiple measurement configurations are enabled, the multiple measurement configurations stored by the UE are enabled; when it is determined according to the enabling/disabling condition that multiple measurement configurations are disabled, the multiple measurement configurations stored by the UE are disabled.

In a possible implementation, the enabling/disabling condition may correspond to a specific measurement configuration, and one enabling/disabling condition may be associated only with the specific measurement configuration (for example, the enabling/disabling condition is associated with an identifier of the specific measurement configuration), or a configuration or related indication information of the enabling/disabling condition is included in the specific measurement configuration. When enabling of multiple measurement configurations is determined according to the enabling/disabling condition, the specific measurement configuration is enabled; when disabling of multiple measurement configurations is determined according to the enabling/disabling condition, the specific measurement configuration is disabled.

Whether the measurement configuration is enabled is determined according to the enabling/disabling condition, which can meet the requirement for measurement configuration in different situations and make the measurement configuration applicable to different scenarios.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the measurement configuration including an identifier of the enabling/disabling condition.

In a possible implementation, one measurement configuration has a unique identifier, which uniquely indicates the measurement configuration.

In a possible implementation, one enabling/disabling condition has a unique identifier for uniquely indicating the enabling/disabling condition.

The enabling/disabling condition is associated with an identifier of the measurement configuration. Whether the measurement configuration corresponding to the identifier is enabled is determined according to the enabling/disabling condition.

The identifier of the enabling/disabling condition for determining whether the measurement configuration is enabled may be included in the measurement configuration, so as to achieve the corresponding relationship.

In an embodiment, the enabling/disabling condition is associated with at least one of: a height of the UE; a speed of the UE; a location of the UE; a movement trajectory of the UE; or time information.

The enabling/disabling condition may be a condition for determining whether the measurement configuration is enabled based on the height/speed/location/time/trajectory of the UE. Here, the determination condition may include, but not limited to: actual values of the height/speed/location/time/trajectory, or a rate of change of the height/speed/location/time/trajectory.

In a possible implementation, a height-based condition may be that the height of the UE is higher than (or lower than) a height threshold, and/or a height change rate is greater than (or less than) a threshold for the height change rate.

In a possible implementation, the speed-based condition (which may include: vertical and/or horizontal and/or 3D speed) may be that the speed of the UE is greater than (or less than) a speed threshold, and/or a speed change rate is greater than (or less than) a threshold for the speed change rate.

In a possible implementation, the location of the UE may be a coordinate location of the UE, or a relative location based on a predetermined reference point. For example, the location of the UE may be a distance between the UE and a base station.

In an example, the location-based condition may be that a distance between the UE and a location of a cell reference (e.g., a location of the base station) is greater than (or less than) a distance threshold, and/or a distance change rate is greater than (or less than) a threshold for the distance change rate.

In a possible implementation, the time information may indicate a time when the measurement configuration is enabled and/or is disabled. The time-based condition may be that a measured time is greater than (or less than) a threshold; or that the measured time is within a specific time range.

In a possible implementation, the trajectory -based condition may be an offset between an actual movement trajectory of the UE and a predetermined trajectory, and whether the measurement configuration is enabled may be determined based on the offset of the trajectory. The trajectory-based condition may be a corresponding relationship between the movement trajectory of the UE and whether the measurement configuration is enabled. For example, a movement trajectory at a first height may correspond to disabling of the measurement configuration, and a movement trajectory at a second height may correspond to enabling of the measurement configuration, and the first height is different from the second height.

In a possible implementation, the receiving the first indication information includes: receiving a first message, where the first message includes the first indication information and the measurement configuration; or receiving a first message, where the first message includes the measurement configuration, and the measurement configuration includes the first indication information.

The first indication information may be carried in the measurement configuration.

In a possible implementation, the first indication information determines whether the measurement configuration carrying the first indication information is enabled.

In a possible implementation, the first indication information determines whether the measurement configuration carrying the first indication information and/or another measurement configuration are enabled.

In an example, the first indication information may correspond to a specific measurement configuration, and the first indication information may be included in a specific configuration of the measurement configuration, for example, a reporting configuration. When the enabling condition is met, the reporting configuration is enabled.

In an example, the first indication information may be included in a corresponding measurement configuration, and indicates whether the specific configuration information is enabled (or disabled). For example, if a value of the first indication information is 1, the measurement configuration is enabled; otherwise it is disabled.

In an embodiment, the first indication information is carried in one of: a radio resource control (RRC) message; a medium-access-control control element (MAC CE); or downlink control information (DCI).

In a possible implementation, the first indication information may be transmitted to the UE separately via the RRC message or the MAC CE or the DCI.

In a possible implementation, the first indication information and the measurement configuration may be transmitted to the UE together through the RRC message or the MAC CE or the DCI.

In an embodiment, the first indication information is further used to instruct the UE to perform measurement and/or perform measurement reporting based on a measurement configuration enabled.

In response to determining that a certain measurement configuration is enabled according to the first indication information, the UE performs measurement and/or performs measurement reporting corresponding to the corresponding measurement configuration.

In an embodiment, the first indication information is further used to instruct the UE to stop measurement and/or measurement reporting currently performed that is associated with the at least one measurement configuration.

In response to determining that a certain measurement configuration is disabled according to the first indication information, the UE stops corresponding measurement and/or measurement reporting if the measurement and/or the measurement reporting corresponding to the measurement configuration is being performed.

In response to determining that a certain measurement configuration is disabled according to the first indication information, the UE does not perform corresponding measurement and/or measurement reporting.

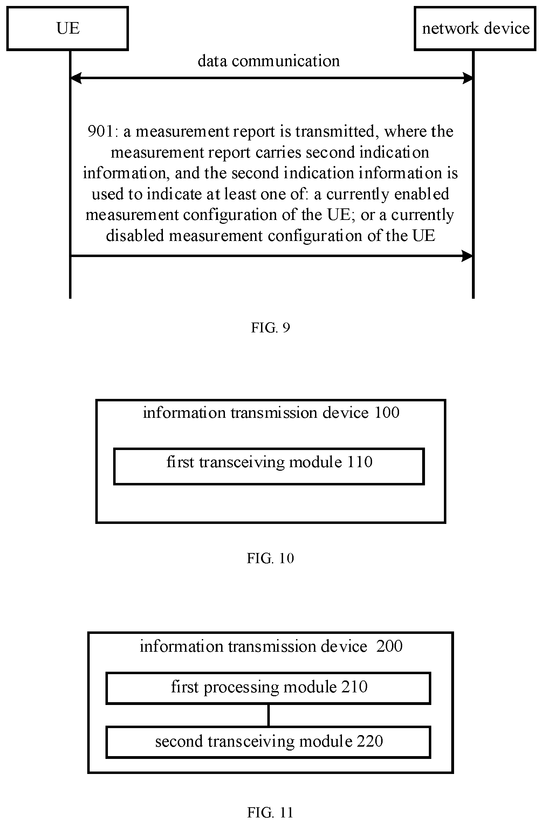

As shown in FIG. 9, an illustrative embodiment provides an information transmission method, which may be executed by a user equipment (UE), and may include the following steps.

In step 901, a measurement report is transmitted, where the measurement report carries second indication information, and the second indication information indicates at least one of: a currently enabled measurement configuration of the UE; or a currently disabled measurement configuration of the UE.

The UE may report enabling and disabling states of its own measurement configuration to a network side through a measurement report, thereby improving transparency of information between the UE and the network device.

A specific example is provided below in combination with any of the above embodiments.

Whether the measurement configuration is enabled is determined according to either of the following two points.
1) Whether the measurement configuration is enabled is determined based on an enabling/disabling condition (altitude/speed/location/time/movement trajectory) of the UE.

For example, when the height of the UE is higher than (or lower than) a threshold, the corresponding measurement configuration is enabled.

For example, when the height of the UE is higher than (or lower than) a threshold, the corresponding measurement configuration is disabled.

In an example, when the measurement configuration is disabled, corresponding measurement is not started and/or measurement reporting is not triggered.

In an example, when the measurement configuration changes from an enabling state to a disabling state, corresponding measurement and/or measurement reporting is stopped.

2) Whether the measurement configuration is enabled is determined according to indication information from the network side (i.e., the first indication information).

Specifically, the determining whether the measurement configuration is enabled according to the first indication information is implemented in one or more of the following manners.
1. The UE receives configuration information from the network side, where the configuration information includes the measurement configuration and the first indication information of the configuration information (an enabling condition or a disabling condition; or enabling indication information or disabling indication information). A measurement is performed according to the configuration information from the network side. The enabling condition and/or the disabling condition is the above-mentioned enabling/disabling condition, and the enabling indication information and/or the disabling indication information is the first indication information.
2. The measurement configuration includes, but is not limited to, one or more measurement identifiers, one or more measurement objects, one or more reporting configurations, one or more measurement Gap configurations, one or more SMTC configurations, etc.
3. In response to the UE enabling a certain measurement configuration, the UE performs measurement, measurement reporting and other processes according to the measurement configuration.
   a) For example, if the measurement configuration is a measurement Gap configuration, the UE performs measurement by using the measurement Gap configuration information.
   b) For example, the UE enables a certain measurement identifier, the UE performs measurement on a measurement object associated with the measurement identifier, and performs measurement reporting according to a reporting configuration associated with the measurement identifier.
   c) For example, the UE enables a certain reporting configuration. If there is an associated measurement identifier, the UE performs corresponding measurement and performs corresponding reporting configuration.
4. In response to the UE disabling a certain measurement configuration, if a measurement and/or measurement reporting corresponding to the measurement configuration is being performed, the corresponding measurement and/or measurement reporting is stopped, or the corresponding measurement and/or measurement reporting is not started.
5. The enabling condition or the disabling condition may correspond to all measurement configurations stored in the UE, or may correspond to part of the measurement configurations, or may correspond to a specific one of the measurement configurations.
   a) For example, the enabling condition or the disabling condition may correspond to all measurement configurations stored in the UE. When enabled, all measurement configurations stored in the UE are enabled; when disabled, they are disabled, and the UE does not start measurement.
   b) For example, the enabling condition or the disabling condition may correspond to part of measurement configurations stored in the UE. Taking the enabling condition as an example, one enabling condition may be associated with one or more measurement configurations (for example, associated with multiple reporting configuration information. For example, a configuration of the enabling condition may include an identifier of the associated configuration information, or the associated configuration information may include an identifier of the enabling condition). When the enabling condition is met, the multiple measurement configurations associated are enabled, otherwise they are disabled. Similarly, the method of using the disabling condition may be derived.
   c) For example, the enabling condition or the disabling condition may correspond to a specific one of the measurement configurations, and a configuration of the enabling condition may be included in a specific configuration of the measurement configuration, such as in a reporting configuration. When the enabling condition is met, the reporting configuration is enabled.
6. The enabling condition may be an enabling condition based on a height/speed/location/time/trajectory of the UE (the disabling condition may be a disabling condition based on the height/speed/location/time/trajectory of the UE.
   a) For example, the height-based condition may be that the height of the UE is higher than (or lower than) a threshold, and a height change rate is greater than (or less than) a threshold.
   b) For example, the speed-based condition (vertical/horizontal/3D speed) may be that the speed of the UE is greater than (or less than) a threshold.
   c) For example, the location-based condition may be that a distance between the UE and a base station is greater than (or less than) a threshold.
   d) In an example, the time-based condition may be that the measured time is greater than (or less than) a threshold; or that the measured time is within a specific time range.
   e) In an example, the trajectory-based condition may be that if the trajectory of the UE changes, the measurement configuration is autonomously disabled.
7. The enabling indication information may correspond to all measurement configurations stored in the UE, or to part of the measurement configurations, or to a specific one of the measurement configurations. The disabling indication information may correspond to all measurement configurations stored in the UE, or to part of the measurement configurations, or to a specific one of the measurement configurations.
   a) For example, the enabling indication information may also indicate that all existing measurement configurations of the UE are enabled; the disabling indication information may also indicate that all existing measurement configurations of the UE are disabled.
   b) For example, the enabling indication information may also indicate an identifier of one or more measurement configurations to be enabled; the disabling indication information may also indicate an identifier of one or more measurement configurations to be disabled. For example, the enabling indication information indicates an identifier of a measurement object, or an identifier of a measurement, or an identifier of a reporting configuration to be enabled; the disabling indication information indicates an identifier of a measurement object, or an identifier of a measurement, or an identifier of a reporting configuration to be disabled.
   c) For example, the enabling indication information may be included in a corresponding measurement configuration to indicate that this kind of configuration information is enabled, and the disabling indication information may be included in a corresponding measurement configuration to indicate that this kind of the configuration information is disabled. For example, a specific value of 1 represents enabling, and other values represents disabling.
8. The enabling condition, or the disabling condition, or the enabling/disabling indication information is configured by a network and may be transmitted to the UE via an RRC message or an MAC CE or a DCI. Such information may be transmitted to the UE separately, or together with the measurement configuration.
9. The measurement report includes a measurement configuration currently enabled and/or disabled by the UE in (e.g., an identifier corresponding to the enabled or disabled measurement configuration).

Embodiment 1: in a case that the reporting configuration information (event trigger) includes an enabling condition, processes are as follows.

### A. Measurement execution processes:

In a possible implementation, a measurement configuration received by the UE includes an enabling/disabling condition, and when it is determined according to the enabling/disabling condition that the measurement configuration is enabled, measurement is performed; otherwise, measurement is not performed.

In an example, for each measurement identifier (e.g., represented as measId) in a measurement identifier list (e.g., represented as measIdList) included in a UE variable (e.g., represented as VarMeasConfig) storing measurement configurations of the UE, if the corresponding reporting configuration includes an enabling condition (disabling condition) and the enabling condition is satisfied (or the disabling condition is not satisfied), for example, a height of the UE is higher than a threshold, a subsequent process is executed to obtain a measurement result of a corresponding measurement object.

In a possible implementation, if the measurement configuration received by the UE does not include the enabling/disabling condition, the UE performs a measurement according to the measurement configuration.

In an example, for each measurement identifier in the measurement identifier list included in the UE variable storing measurement configurations of the UE, if a corresponding reporting configuration does not include an enabling condition (disabling condition), a subsequent process is executed to obtain a measurement result of a corresponding measurement object.

### B. Measurement reporting processes:

In a possible implementation, a measurement configuration received by the UE includes an enabling/disabling condition. When it is determined according to the enabling/disabling condition that the measurement configuration is enabled, measurement reporting is performed; otherwise, measurement reporting is not performed.

In an example, for each measurement identifier in a measurement identifier list included in a UE variable storing the measurement configurations, if a corresponding reporting configuration includes an enabling condition (disabling condition) and the enabling condition is met (or the disabling condition is not met) (or does not include the enabling condition (disabling condition)), this reporting configuration is an event trigger and a trigger condition is met, the measurement reporting is enabled.

In a possible implementation, the measurement configuration received by the UE includes an enabling/disabling condition, and the measurement configuration is determined to be disabled according to the enabling/disabling condition, and a deactivation reporting indication is configured. In this case, measurement reporting is performed, and it is indicated that the measurement reporting is caused by the measurement configuration being disabled; and/or a triggering cell list is cleared; and/or a measurement reporting entity corresponding to the measurement identifier is removed from a UE variable storing the measurement configurations; and/or a periodic reporting timer corresponding to the measurement identifier is stopped.

In an example, for each measurement identifier in a measurement identifier list included in a UE variable storing measurement configurations of the UE, a corresponding reporting configuration includes an enabling condition (disabling condition) and the enabling condition is not satisfied (or the disabling condition is satisfied). In this case, if a deactivation reporting indication is configured, a measurement report is triggered, and the measurement report may indicate that measurement reporting is caused by the measurement configuration being disabled; and/or the trigger cell list is cleared; and/or a measurement reporting entity corresponding to the measurement identifier is removed from a UE variable (e.g., represented as VarMeasReportList) storing measurement configurations; and/or a periodic reporting timer corresponding to the measurement identifier is stopped.

In a possible implementation, if a measurement configuration received by the UE does not include the enabling/disabling condition, measurement reporting is performed according to the measurement configuration. In an example, for each measurement identifier in the measurement identifier list included in the UE variable storing the measurement configurations, in a case that a corresponding reporting configuration does not include the enabling condition (disabling condition), reporting configuration is an event trigger and a trigger condition is met, measurement reporting is started.

Embodiment 2: in a case that the enabling condition is associated with a set of measurement identifiers (event trigger), processes are as follows.

### A. Measurement execution processes:

In a possible implementation, an identifier of the measurement configuration received by the UE is associated with an enabling/disabling condition, and when it is determined according to the enabling/disabling condition that the measurement configuration is enabled, measurement is performed; otherwise, measurement is not performed.

In an example, for each measurement identifier in a measurement identifier list included in a UE variable storing the measurement configurations of the UE, if a measurement identifier is associated with an enabling condition (disabling condition) and the enabling condition is met (or the disabling condition is not met), a subsequent process is executed to obtain a measurement result of a corresponding measurement object according to the associated reporting configuration.

In a possible implementation, if an identifier of the measurement configuration received by the UE is not associated with the enabling/disabling condition, the UE performs measurement according to the measurement configuration.

In an example, for each measurement identifier in the measurement identifier list included in the UE variable storing the measurement configurations, if this measurement identifier is not associated with an enabling condition (disablin g condition), a subsequent process is executed to obtain a measurement result of a corresponding measurement object according to the associated reporting configuration.

### B. Measurement reporting processes:

In a possible implementation, an identifier of the measurement configuration received by the UE is associated with an enabling/disabling condition, and when it is determined according to the enabling/disabling condition that the measurement configuration is enabled, measurement reporting is performed; otherwise, measurement reporting is not performed.

In an example, in a possible implementation, an identifier of the measurement configuration received by the UE is associated with an enabling/disabling condition, and when it is determined according to the enabling/disabling condition that the measurement configuration is enabled, measurement reporting is performed; otherwise, measurement reporting is not performed.

For each measurement identifier in a measurement identifier list included in a UE variable storing the measurement configurations, in a case that the measurement identifier is associated with an enabling condition (disabling condition) and the enabling condition is met (or the disabling condition is not met), the reporting configuration is an event trigger, and a trigger condition is met, measurement reporting is started.

In a possible implementation, an identifier of the measurement configuration received by the UE is associated with the enabling/disabling condition. If the measurement configuration is determined to be disabled based on the enabling/disabling condition and a deactivation reporting indication is configured, measurement reporting is performed and it is indicated that the measurement reporting is caused by the measurement configuration being disabled; and/or a triggering cell list is cleared; and/or a measurement reporting entity corresponding to the measurement identifier is removed from the VarMeasReportList; and/or; a periodic reporting timer corresponding to the measurement identifier is stopped.

In an example, for each measurement identifier in the measurement identifier list included in the UE variable storing the measurement configurations, if the measurement identifier is associated with an enabling condition (disabling condition) and the enabling condition is not met (or the disabling condition is met), measurement reporting corresponding to the measurement identifier is as follows.

If a deactivation reporting indication is configured, measurement reporting is triggered, and a measurement report may indicate that the measurement reporting is caused by the measurement configuration being disabled.

Optionally, a trigger cell list is cleared.

Optionally, a measurement reporting entity corresponding to the measurement identifier is removed from a UE variable storing measurement reporting related information of the UE.

Optionally, a periodic reporting timer corresponding to the measurement identifier is stopped.

In a possible implementation, if the identifier of the measurement configuration received by the UE is not associated with the enabling/disabling condition, the UE performs measurement reporting according to the measurement configuration.

In an example, for each measurement identifier in the measurement identifier list included in the UE variable storing the measurement configurations, if the measurement identifier is not associated with an enabling condition (disabling condition), and the reporting configuration is an event trigger and a trigger condition is met, measurement reporting is started.

As mentioned above, the UE variable storing the measurement configurations of the UE may include a configuration of measurements performed by the UE, and mobility related measurements, including intra-frequency, inter-frequency and inter-RAT measurements.

In the above, the UE variable storing the measurement reporting related information includes measurement related information that a triggering condition is satisfied.

As shown in FIG. 10, an illustrative embodiment provides an information transmission device 100, which is arranged in a network device and includes:

a first transceiving module 110, configured to transmit first indication information, where the first indication information is used by a user equipment (UE) to determine whether at least one measurement configuration is enabled.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the first transceiving module 110 is further configured to: receive a measurement report, where the measurement report carries second indication information, and the second indication information indicates at least one of: an enabled measurement configuration; or a disabled measurement configuration.

In an embodiment, the first transceiving module 110 is further configured to: transmit a first message, where the first message includes the first indication information and the at least one measurement configuration; or transmit a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, the first indication information is further used to instruct the UE to perform measurement and/or perform measurement reporting based on a measurement configuration enabled.

In an embodiment, the first indication information is further used to instruct the UE to stop measurement and/or measurement reporting currently performed that is associated with the at least one measurement configuration.

In an embodiment, the at least one measurement configuration includes at least one of: one or more measurement identifiers; one or more measurement objects; one or more reporting configurations; one or more measurement gap (Gap) configurations; or one or more synchronization signal block measurement timing configurations (SMTCs).

As shown in FIG. 11, an illustrative embodiment provides an information transmission device 200, which is arranged in a UE and includes: a first processing module 210, configured to determine whether at least one measurement configuration is enabled according to first indication information, where the first indication information is used by the UE to determine whether the at least one measurement configuration is enabled.

In an embodiment, the device further includes a second transceiving module 220, configured to receive the first indication information.

In an embodiment, the first indication information indicates one of: whether one or more of the at least one measurement configuration is enabled; or whether each of the at least one measurement configuration is enabled.

In an embodiment, the first indication information indicating whether one or more of the at least one measurement configuration is enabled includes: the first indication information being associated with an identifier of the one or more of the at least one measurement configuration; and/or the at least one measurement configuration including an identifier of the first indication information.

In an embodiment, the first indication information indicates: an enabling/disabling condition for whether one or more of the at least one measurement configuration is enabled, or an enabling/disabling condition for whether each of the at least one measurement configuration is enabled.

In an embodiment, the first indication information indicating the enabling/disabling condition for whether one or more of the at least one measurement configuration is enabled includes: the enabling/disabling condition being associated with an identifier of the one or more of the at least one measurement configuration; and/or the at least one measurement configuration including an identifier of the enabling/disabling condition.

In an embodiment, the enabling/disabling condition is associated with at least one of: a height of the UE; a speed of the UE; a location of the UE; a movement trajectory of the UE; or time information.

In an embodiment, the second transceiving module 220 is specifically configured to: receive a first message, where the first message includes the first indication information and the at least one measurement configuration; or receive a first message, where the first message includes the at least one measurement configuration, and the at least one measurement configuration includes the first indication information.

In an embodiment, the first indication information is carried in one of: a radio resource control (RRC) message; a medium-access-control control element (MAC CE); or downlink control information (DCI).

In an embodiment, the first indication information is further used to instruct the UE to perform measurement and/or perform measurement reporting based on a measurement configuration enabled.

In an embodiment, the first indication information is further used to instruct the UE to stop measurement and/or measurement reporting currently performed that is associated with the at least one measurement configuration.

In an embodiment, the device further includes: a second transceiving module 220, configured to transmit a measurement report, where the measurement report carries second indication information, and the second indication information indicates at least one of: a currently enabled measurement configuration of the UE; or a currently disabled measurement configuration of the UE.

In an embodiment, the at least one measurement configuration includes at least one of: one or more measurement identifiers; one or more measurement objects; one or more reporting configurations; one or more measurement gap configurations; or one or more synchronization signal block measurement timing configurations (SMTCs).

An embodiment of the present invention provides a communication device, including: a processor; a memory configured to store instructions executable by the processor; the processor is configured to implement the information transmission method according to any of the embodiments of the present invention when running the executable instructions.

In an embodiment, the communication device may include, but not limited to, at least one of a UE or a network device. The network device may include a core network or an access network device, etc. The access network device may include a base station; the core network may include AMF (Access and Mobility Management Function) and SMF (Session Management Function).

The processor may include various types of storage media. The storage media are non-temporary computer storage media that can continue to memorize information stored thereon after a UE is powered off.

The processor may be connected to the memory via a bus or the like, and may be used to read an executable program stored in the memory, for example, at least one of the methods shown in FIG. 3 to FIG. 9.

An embodiment of the present invention further provides a computer storage medium. The computer storage medium stores a computer executable program. The computer executable program is executed by a processor, to implement the information transmission method according to any of the embodiments of the present invention, for example, at least one of the methods shown in FIG. 3 to FIG. 9.

Regarding the device or the storage medium in the above embodiments, a specific manner in which multiple modules perform operations has been described in detail in the method embodiments, and will not be elaborated here.

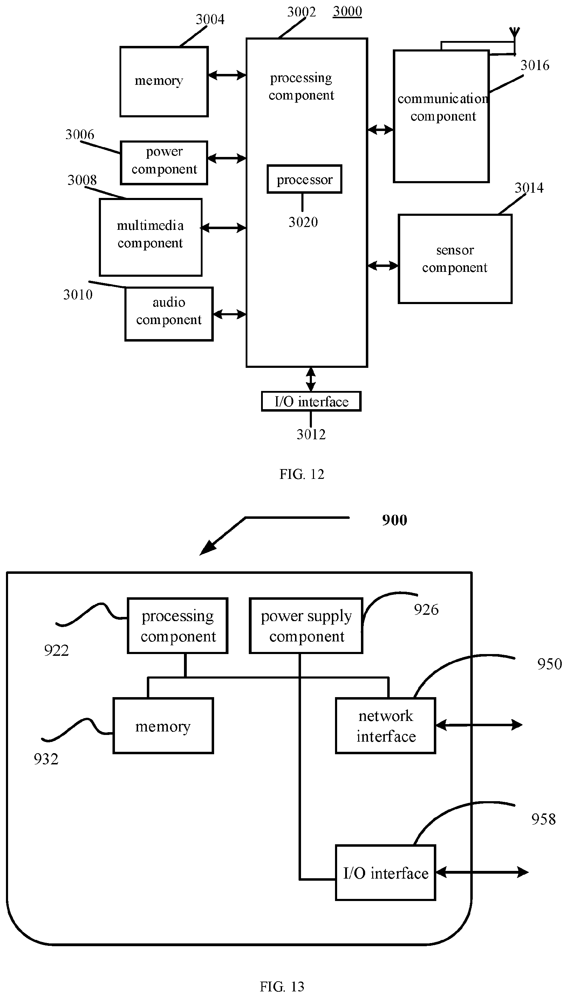

FIG. 12 is a block diagram of a UE 3000 according to an illustrative embodiment. For example, the UE 3000 may be a mobile phone, a computer, a digital broadcast UE, a messaging device, a game console, a tablet device, a medical device, a fitness device, a personal digital assistant, etc.

Referring to FIG. 12, the UE 3000 may include one or more of the following components: a processing component 3002, a memory 3004, a power component 3006, a multimedia component 3008, an audio component 3010, an input/output (I/O) interface 3012, a sensor assembly 3014, and a communication component 3016.

The processing component 3002 generally controls overall operations of the UE 3000, such as operations associated with a display, a phone call, a data communication, a camera operation, and a recording operation. The processing component 3002 may include one or more processors 3020 to execute instructions to complete all or part of steps of the above - mentioned method. In addition, the processing component 3002 may include one or more modules to facilitate an interaction between the processing component 3002 and other components. For example, the processing component 3002 may include a multimedia module to facilitate an interaction between the multimedia component 3008 and the processing component 3002.

The memory 3004 is configured to store various types of data to support operations on the UE 3000. Examples of such data include instructions for any application or method operating on the UE 3000, contact data, phone book data, message, picture, video, etc. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 3006 provides power to various components of the UE 3000. The power component 3006 may include a power management system, one or more power supplies, and other components associated with generating, managing, and distributing power of the UE 3000.

The multimedia component 3008 includes a screen that provides an output interface between the UE 3000 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense a touch, a slide, and a gesture on the touch panel. The touch sensor can not only sense the boundary of the touch or slide operation, but also detect a duration and a pressure associated with the touch or slide operation. In some embodiments, the multimedia component 3008 includes a front camera and/or a rear camera. When the UE 3000 is in an operating mode, such as a shooting mode or a video mode, the front camera and/or the rear camera may receive external multimedia data. Each of the front camera and the rear camera may have a fixed optical lens system or have a focal length and optical zoom capability.

The audio component 3010 is configured to output and/or input audio signals. For example, the audio component 3010 includes a microphone (MIC), and when the UE 3000 is in an operation mode, such as a call mode, a recording mode, and a speech recognition mode, the microphone is configured to receive an external audio signal. The received audio signal may be further stored in the memory 3004 or transmitted via the communication component 3016. In some embodiments, the audio component 3010 also includes a speaker, configure to output audio signals.

The I/O interface 812 provides an interface between the processing component 3002 and peripheral interface modules, such as a keyboard, a click wheel, buttons, etc. The buttons may include, but not limited to, a home button, a volume button, a start button, and a lock button.

The sensor assembly 3014 includes one or more sensors for providing various aspects of status assessment for the UE 3000. For example, the sensor assembly 3014 may detect a turned-on/turned-off state of the device 3000, and may achieve relative positioning of the components, for example, a display and a keypad of the UE 3000. The sensor assembly 3014 may also detect a location change of the UE 3000 or a component of the UE 3000, presence or absence of a contact between the user and the UE 3000, orientation or acceleration/deceleration of the UE 3000, and a temperature change of the UE 3000. The sensor assembly 3014 may include a proximity sensor configured to detect the presence of a nearby object without any physical contact. The sensor assembly 3014 may also include a light sensor, such as a CMOS or CCD image sensor, for use in imaging applications. In some embodiments, the sensor assembly 3014 may also include an acceleration sensor, a gyroscope sensor, a magnetic sensor, a pressure sensor, or a temperature sensor.

The communication component 3016 is configured to facilitate wired or wireless communication between the UE 3000 and other devices. The UE 3000 may access a wireless network based on a communication standard, such as Wi-Fi, 4G or 5G, or a combination thereof. In an illustrative embodiment, the communication component 3016 receives a broadcast signal or broadcast-related information from an external broadcast management system via a broadcast channel. In an illustrative embodiment, the communication component 816 also includes a near field communication (NFC) module to facilitate short-range communication. For example, the NFC module may be implemented based on radio frequency identifier (RFID) technology, infrared data association (IrDA) technology, ultra-wideband (UWB) technology, Bluetooth (BT) technology and other technologies.

In an illustrative embodiment, the UE 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 3004 including the instructions, and the instructions may be executed by the processor 3020 of the UE 3000 to complete the above methods. For example, the non-transitory computer-readable storage medium may be a ROM, a random access memory (RAM), a CD-ROM, a magnetic tape, a floppy disk, an optical data storage device, etc.

As shown in FIG. 13, an embodiment of the present invention shows a structure of a base station. For example, the base station 900 may be provided as a network device. Referring to FIG. 13, the base station 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned methods applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™} or the like.

After referring to the specification and practicing the invention disclosed herein, those skilled in the art will readily appreciate other embodiments of the present invention. The present invention is intended to cover any variations, uses or adaptations of the present invention, and the variations, uses or adaptations follow a general principle of the present invention and include common knowledge or customary techniques in the art that are not disclosed in the present invention. The specification and the embodiments are to be considered illustrative only, and the true scope and spirit of the present invention are indicated by the following claims.

It is appreciated that the present invention is not limited to the exact construction that has been described above and shown in the drawings and that various modifications and changes can be made without departing from the scope thereof. The scope of the present invention is limited only by the appended claims.

## Claims

1. An information transmission method, executed by a network device, comprising:
transmitting first indication information, wherein the first indication information is used by a user equipment (UE) to determine whether at least one measurement configuration is enabled.

2. The method according to claim 1, wherein the first indication information indicates one of:
whether one or more of the at least one measurement configuration is enabled; or
whether each of the at least one measurement configuration is enabled.

3. The method according to claim 1 or 2, wherein the first indication information indicating whether one or more of the at least one measurement configuration is enabled comprises:
the first indication information being associated with an identifier of the one or more of the at least one measurement configuration; and/or
the at least one measurement configuration comprising an identifier of the first indication information.

4. The method according to any one of claims 1 to 3, wherein the first indication information indicates:
an enabling/disabling condition for whether one or more of the at least one measurement configuration is enabled, or
an enabling/disabling condition for whether each of the at least one measurement configuration is enabled.

5. The method according to claim 4, wherein the first indication information indicating the enabling/disabling condition for whether one or more of the at least one measurement configuration is enabled comprises:
the enabling/disabling condition being associated with an identifier of the one or more of the at least one measurement configuration; and/or
the measurement configuration comprising an identifier of the enabling/disabling condition.

6. The method according to claim 5, wherein the enabling/disabling condition is associated with at least one of:
a height of the UE;
a speed of the UE;
a location of the UE;
a movement trajectory of the UE; or
time information.

7. The method according to any one of claims 1 to 3, further comprising:
receiving a measurement report, wherein the measurement report carries second indication information, and the second indication information indicates at least one of:
an enabled measurement configuration; or
a disabled measurement configuration.

8. The method according to any one of claims 1 to 3, wherein the transmitting the first indication information comprises:
transmitting a first message, wherein the first message comprises the first indication information and the at least one measurement configuration; or
transmitting a first message, wherein the first message comprises the at least one measurement configuration, and the at least one measurement configuration comprises the first indication information.

9. The method according to any one of claims 1 to 3, wherein the first indication information is carried in one of:
a radio resource control (RRC) message;
a medium-access-control control element (MAC CE); or
downlink control information (DCI).

10. The method according to any one of claims 1 to 3, wherein the first indication information is further used to instruct the UE to perform measurement and/or perform measurement reporting based on a measurement configuration enabled.

11. The method according to any one of claims 1 to 3, wherein the first indication information is further used to instruct the UE to stop measurement and/or measurement reporting currently performed that is associated with the at least one measurement configuration.

12. The method according to any one of claims 1 to 3, wherein the at least one measurement configuration comprises at least one of:
one or more measurement identifiers;
one or more measurement objects;
one or more reporting configurations;
one or more measurement gap (Gap) configurations; or
one or more synchronization signal block measurement timing configurations (SMTCs).

13. An information transmission method, executed by a user equipment (UE), comprising:
determining whether at least one measurement configuration is enabled according to first indication information, wherein the first indication information is used by the UE to determine whether the at least one measurement configuration is enabled.

14. The method according to claim 13, further comprising:
receiving the first indication information.

15. The method according to claim 13, wherein the first indication information indicate s one of:
whether one or more of the at least one measurement configuration is enabled; or
whether each of the at least one measurement configuration is enabled.

16. The method according to any one of claims 13 to 15, wherein the first indication information indicating whether one or more of the at least one measurement configuration is enabled comprises:
the first indication information being associated with an identifier of the one or more of the at least one measurement configuration; and/or
the at least one measurement configuration comprising an identifier of the first indication information.

17. The method according to any one of claims 13 to 16, wherein the first indication information indicates:
an enabling/disabling condition for whether one or more of the at least one measurement configuration is enabled, or
an enabling/disabling condition for whether each of the at least one measurement configuration is enabled.

18. The method according to claim 17, wherein the first indication information indicating the enabling/disabling condition for whether one or more of the at least one measurement configuration is enabled comprises:
the enabling/disabling condition being associated with an identifier of the one or more of the at least one measurement configuration; and/or
the at least one measurement configuration comprising an identifier of the enabling/disabling condition.

19. The method according to claim 17, wherein the enabling/disabling condition is associated with at least one of:
a height of the UE;
a speed of the UE;
a location of the UE;
a movement trajectory of the UE; or
time information.

20. The method according to claim 14, wherein the receiving the first indication information comprises:
receiving a first message, wherein the first message comprises the first indication information and the at least one measurement configuration; or
receiving a first message, wherein the first message comprises the at least one measurement configuration, and the at least one measurement configuration comprises the first indication information.

21. The method according to claim 14, wherein the first indication information is carried in one of:
a radio resource control (RRC) message;
a medium-access-control control element (MAC CE); or
downlink control information (DCI).

22. The method according to any one of claims 13 to 16, wherein the first indication information is further used to instruct the UE to perform measurement and/or perform measurement reporting based on a measurement configuration enabled.

23. The method according to any one of claims 13 to 16, wherein the first indication information is further used to instruct the UE to stop measurement and/or measurement reporting currently performed that is associated with the at least one measurement configuration.

24. The method according to any one of claims 13 to 16, further comprising:
transmitting a measurement report, wherein the measurement report carries second indication information, and the second indication information indicates at least one of:
a currently enabled measurement configuration of the UE; or
a currently disabled measurement configuration of the UE.

25. The method according to any one of claims 13 to 16, wherein the at least one measurement configuration comprises at least one of:
one or more measurement identifiers;
one or more measurement objects;
one or more reporting configurations;
one or more measurement gap configurations; or
one or more synchronization signal block measurement timing configurations (SMTCs).

26. An information transmission device, arranged in a network device, comprising:
a first transceiving module, configured to transmit first indication information, wherein the first indication information is used by a user equipment (UE) to determine whether at least one measurement configuration is enabled.

27. An information transmission device, arranged in a user equipment (UE), comprising:
a first processing module, configured to determine whether at least one measurement configuration is enabled according to first indication information, wherein the first indication information is used by the UE to determine whether the at least one measurement configuration is enabled.

28. A communication device, comprising:
a processor; and
a memory configured to store instructions executable by the processor;
wherein the processor is configured to: implement the information transmission device according to any one of claims 1 to 12 or any one of claims 13 to 25 when executing the executable instructions.

29. A computer storage medium, wherein the computer storage medium stores a computer executable program, and the executable program, when executed by a processor, causes the information transmission device according to any one of claims 1 to 12 or any one of claims 13 to 25 to be implemented.
